# FASCICULE DE BREVET EUROPEEN

(11) **EP 3 267 806 B1**
(45) Date de publication et mention de la délivrance du brevet: **26.02.2020**
(21) Numéro de dépôt: 16715087.9
(22) Date de dépôt: 14.03.2016
(51) Int. Cl.: A23L 3/3454, A23G 3/34, A23L 5/10, A23L 21/10, A23L 19/00, A23B 7/005, A23B 7/08

(54) **PROCÉDÉ DE CONFISAGE D'ALIMENTS**
VERFAHREN ZUM KANDIEREN VON LEBENSMITTELN
METHOD FOR CANDYING FOOD

(30) Priorité: 11.03.2015 FR 1552026
(43) Date de publication de la demande: 17.01.2018
(73) Titulaire: SEB S.A., 69130 Ecully (FR)
(72) Inventeur: BLONDEL, Mathilde, 21120 Dienay (FR)
(74) Mandataire: Bourrières, Patrice
(86) Numéro de dépôt international: PCT/IB2016/000377
(87) Numéro de publication internationale: WO 2016/142778

(56) Documents cités:
- EP-A1- 1 793 172
- FR-A1- 2 679 419
- GB-A- 551 958
- KR-A- 20110 123 322
- RU-C1- 2 381 694
- US-A1- 2009 104 323
- DATABASE WPI Week 201323 Thomson Scientific, London, GB; AN 2013-B96084 XP002741027, -& CN 102 763 756 A (INST MEDICINAL PLANT CHINESE ACAD MEDICA) 7 novembre 2012 (2012-11-07)

## Description

La présente invention concerne de manière générale un procédé de préparation d'aliments à confire, c'est-à-dire de cuisson dans un sirop de sucre suffisamment concentré pour permettre la conservation de ces aliments.

Il est connu dans l'art antérieur des dispositifs de préparation d'aliments en leur imposant un cycle de pression, tels que celui décrit dans les documents US20110183035 ou KR20110123322A par exemple. En contrepartie, ce système présente notamment l'inconvénient de proposer un cycle total de cuisson qui dure longtemps, ce qui pénalise une utilisation quotidienne, car l'utilisateur doit prévoir longtemps à l'avance de lancer la préparation des aliments, ce qui est de moins en moins compatible avec les exigences de la vie active.

Le document KR101106590 présente lui aussi un appareil de préparation d'aliments en leur imposant un cycle de pression, mais avec une multitude de récipients qui s'emboitent les uns dans les autres. En d'autres termes, la structure de cet appareil est complexe, et de plus, le cycle de préparation est également long.

Un but de la présente invention est de répondre aux inconvénients des documents de l'art antérieur mentionnés ci-dessus et en particulier, tout d'abord, de proposer un procédé rapide de préparation d'aliments à confire au sucre.

Pour cela un premier aspect de l'invention concerne un procédé de préparation d'aliments à confire au sucre, comprenant les étapes consistant à :
- placer les aliments à confire dans une enceinte de cuisson avec une quantité prédéterminée de sirop au sucre ou au miel,
- opérer une cuisson primaire par chauffage et exposition des aliments à confire à une ambiance de vapeur sous pression pendant un temps de cuisson primaire,
- opérer une décompression de l'enceinte de cuisson et laisser les aliments à confire macérer dans le sirop pendant un temps de macération,
- opérer une cuisson secondaire par chauffage et exposition des aliments à confire à une ambiance de vapeur sous pression pendant un temps de cuisson secondaire
- les aliments à confire sont chauffés à une température comprise entre 105°C et 120°C bornes incluses pendant l'étape de cuisson primaire et/ou l'étape de cuisson secondaire,
- les aliments à confire sont soumis à une pression comprise entre 1200mbar et 2000mbar bornes incluses pendant l'étape de cuisson primaire et/ou l'étape de cuisson secondaire.

Le procédé selon l'invention propose d'opérer les étapes de cuisson primaire et secondaire sous pression, et dans une ambiance de vapeur, ce qui permet de raccourcir notablement la durée totale du cycle de cuisson. De plus, le fait d'utiliser une ambiance de vapeur supprime le risque de caramélisation, la préparation peut donc être complètement automatisée. Les aliments étant placés avec du sirop au sucre ou du miel, ils y baignent au moins partiellement. L'étape de cuisson primaire et de décompression totale permet de faire sortir au moins une partie de l'eau contenue dans les aliments, qui est remplacée par du sucre au cours de l'étape de décompression et de cuisson secondaire, cette dernière étape permettant éventuellement de donner en plus une coloration aux aliments.

Avantageusement, l'étape consistant à placer les aliments à confire avec du sirop de sucre ou du miel est une étape consistant à faire tremper complètement les aliments à confire, autrement dit, cela consiste à les recouvrir de sirop au sucre ou de miel.

Avantageusement, l'étape de cuisson primaire comprend une étape de décompression primaire de l'enceinte de cuisson. Une telle étape de décompression primaire permet à la vapeur d'eau présente dans l'enceinte de cuisson de chasser l'air contenu et de ce fait d'améliorer le chauffage ultérieur car la conduction de chaleur sera plus efficace. Cela permet également d'obtenir une atmosphère appauvrie en oxygène, ce qui limite le phénomène d'oxydation des aliments.

Avantageusement, l'étape de décompression primaire est effectuée entre 7 et 15 minutes après le début de la cuisson primaire et dure moins de deux minutes.

Avantageusement, l'étape de décompression primaire est réalisée à une vitesse de décompression inférieure ou égale à 50mbar par minute. Cette vitesse de décompression limitée permet d'éviter les projections de sirop sucré ou de miel sur les parois internes de l'appareil.

Avantageusement, l'étape de cuisson secondaire comprend une étape de décompression secondaire de l'enceinte de cuisson. Une telle étape de décompression secondaire permet à la vapeur d'eau présente dans l'enceinte de cuisson de chasser l'air contenu et d'améliorer le chauffage ultérieur car la conduction de chaleur sera plus efficace. Cela permet également d'obtenir une atmosphère appauvrie en oxygène, ce qui limite le phénomène d'oxydation des aliments.

Avantageusement, l'étape de décompression secondaire est effectuée entre 7 et 15 minutes après le début de la cuisson secondaire et dure moins de deux minutes.

Avantageusement, l'étape de décompression secondaire est réalisée à une vitesse de décompression inférieure ou égale à 50mbar par minute. Cette vitesse de décompression limitée permet d'éviter les projections de sirop sucré ou de miel sur les parois internes de l'appareil.

Avantageusement, l'étape de cuisson secondaire est suivie d'une étape de décompression finale.

Avantageusement, l'étape de décompression finale est réalisée à une vitesse de décompression inférieure ou égale à 50mbar par minute. Cette vitesse de décompression limitée permet d'éviter les projections de sirop sucré ou de miel sur les parois internes de l'appareil.

La température pendant l'étape de cuisson primaire est comprise entre 105°C et 110°C, bornes incluses.

La température pendant l'étape de cuisson secondaire est comprise entre 105°C et 120°C, bornes incluses. Cette température permet de dorer les aliments en provoquant une réaction de Maillard.

Avantageusement, l'étape de macération dure entre 15 et 60 minutes, bornes incluses.

Avantageusement, les aliments à confire sont placés dans un récipient et cuits au bain marie pendant l'étape de cuisson primaire et l'étape de cuisson secondaire. Cette cuisson au bain marie provoque une température homogène et limitée dans les aliments, ce qui supprime le risque de caramélisation.

Avantageusement, il est procédé à un ajout de sucre ou de miel lors de l'étape de macération.

Avantageusement, l'étape de cuisson primaire et l'étape de macération sont répétées au moins deux fois avant l'étape de cuisson secondaire

D'autres caractéristiques et avantages de la présente invention apparaîtront plus clairement à la lecture de la description détaillée qui suit des modes de réalisation de l'invention donnés à titre d'exemple nullement limitatif et illustrés par les dessins annexés, dans lesquels :
- la figure 1 représente un exemple de relevés de température et de pression au cours d'un cycle de préparation d'aliments à confire au sucre, selon le procédé de l'invention ;
- la figure 2 représente un appareil de cuisson agencé pour mettre en œuvre le procédé selon la présente invention, pendant une étape de cuisson primaire, au cours duquel une mise en température est effectuée ;
- la figure 3 représente l'appareil de cuisson de la figure 2, pendant un deuxième temps de préparation au cours duquel une décompression est effectuée.

Dans la présente demande, on fait mention d'un procédé de préparation d'aliments à confire au sucre, mais on peut également parler d'un procédé consistant à confire des aliments avec du sucre, c'est à dire un procédé au cours duquel au moins une partie de l'eau initialement contenue dans les aliments est remplacée par du sucre.

On fait également mention d'une exposition des aliments à confire à une ambiance de vapeur sous pression, il faut comprendre qu'il s'agit de créer des conditions de pression et de température autour des aliments à confire de sorte à faire s'échapper de la vapeur des aliments à confire. Il n'y a donc pas nécessairement d'exposition à un jet de vapeur sous pression, ni à un courant forcé par un ventilateur par exemple.

Les températures mentionnées sont celles de l'ambiance de vapeur et sont mesurées à l'intérieur de l'enceinte de cuisson, à l'endroit où sont placés les aliments à confire.

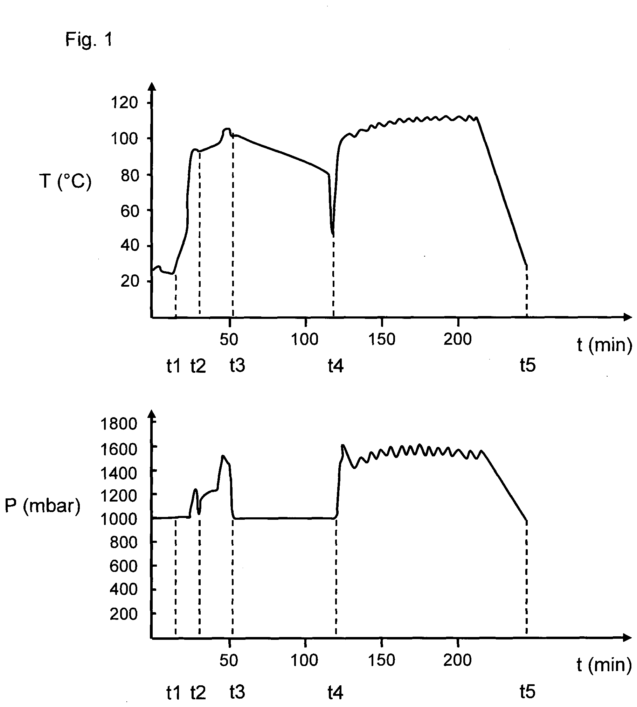

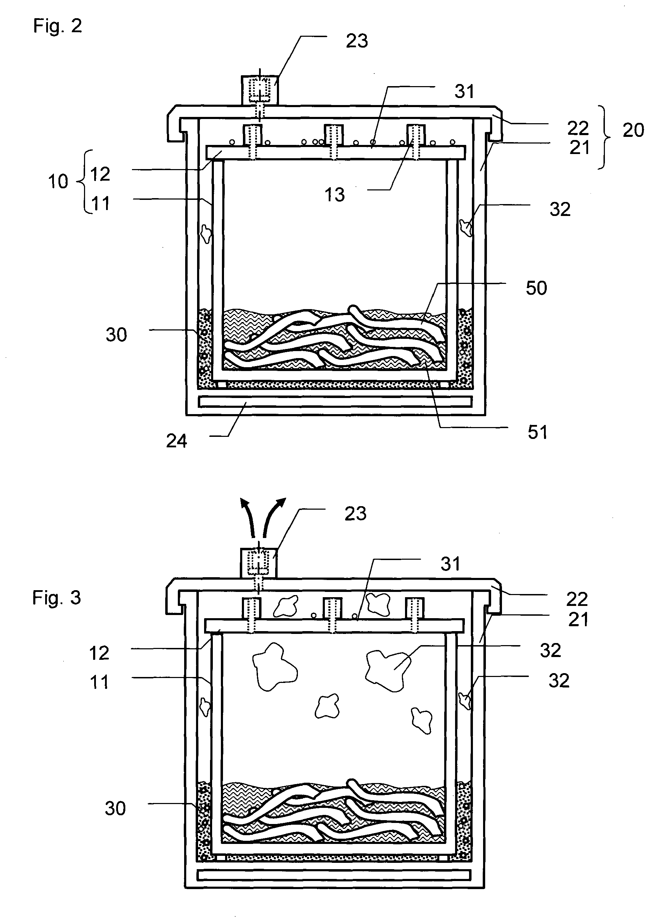

La figure 1 représente des mesures de température et de pressions réalisées lors de la cuisson de citrons (deuxième exemple de réalisation décrit en détails ci-dessous) effectuée selon le procédé selon l'invention, dans l'appareil de la figure 2. Des aliments à confire sont placés dans une enceinte de cuisson avec du sirop au sucre et une étape de cuisson primaire est effectuée des instants t1 à t3, avec une décompression primaire à t2.

La température des aliments lors de la cuisson primaire monte progressivement pour arriver à une température comprise entre 105°C et 110°C. Ainsi, la température est suffisante pour obtenir une ébullition de l'eau au cœur de l'aliment tout en préservant la structure des aliments.

Ensuite, une décompression totale est effectuée, les aliments sont laissés à pression ambiante, et ils macèrent dans le sirop au sucre entre t3 et t4. On peut envisager de rajouter du sucre si besoin un peu avant t4.

A l'instant t4 débute une étape de cuisson secondaire jusqu'à t5, au cours de laquelle la température peut être comprise entre 105°C et 120°C. Cette cuisson secondaire est enfin suivie d'une décompression finale de l'appareil.

Les étapes de cuisson primaire(s) et de cuisson secondaire sont donc suivies de décompressions, et il est avantageux de ne pas effectuer ces décompressions de manière trop rapide, pour éviter des projections de sirop contre les parois de l'enceinte de cuisson. On peut par exemple imposer que la vitesse de décompression soit inférieure à 50mbar par minute.

Dans un premier exemple de préparation, on prépare du ginseng pour le confire avec du miel. Dans l'enceinte de cuisson (un pot en céramique), on place 250g de ginseng et 420g de miel, et le pot en céramique est disposé dans une cuve avec 500g d'eau au bain marie. Le ginseng subit ensuite 30 minutes de cuisson primaire, une décompression totale, une macération (ou imprégnation) de une heure puis une cuisson secondaire de trois heures à 114°C et enfin une décompression douce.

Pendant la cuisson primaire, la température augmente progressivement, pour atteindre environ 105°C au temps t3. Il est avantageux pour le ginseng confit selon le procédé selon l'invention d'avoir une couleur foncée obtenue par réaction de Maillard. Afin d'obtenir cette couleur rapidement, il est avantageux d'avoir une température supérieure à 114°C pendant au moins une partie de la cuisson secondaire (au moins 50% du temps de la cuisson secondaire).

Dans un deuxième exemple de réalisation, une préparation de citrons à confire a été effectuée. Les citrons ont été pelés, les peaux coupées en languettes, et ont été mis à bouillir dans de l'eau pendant cinq minutes. La cuisson primaire peut durer 30 minutes avec une cible de température à environ 110°C avec une décompression primaire de 32 secondes effectuée 12 minutes après le début de la cuisson primaire, puis une décompression totale est opérée à l'instant t3, et les citrons sont laissés repos pendant 1 heure. Les citrons blanchis ont un taux d'humidité important, il faut donc ajouter du sucre avant l'étape de cuisson secondaire qui peut durer 2 heures à 110°C avec une décompression secondaire de 32 secondes effectuée 12 minutes après le début de la cuisson secondaire.

Dans cet exemple, il n'est pas souhaitable que le citron soit coloré contrairement au ginseng, la température a ainsi pu être limitée à 110°C. La température de cuisson secondaire pourrait même être limitée à un peu plus de 100°C.

La figure 2 représente un appareil de cuisson mettant en œuvre le procédé selon la présente invention. Une enceinte principale 20 comprend une cuve de chauffe 21 et un couvercle principal 22, agencé pour fermer de manière étanche la cuve de chauffe 21. Le couvercle principal 22 peut s'accoupler à la cuve de chauffe par une interface à baïonnette par exemple, et comprend une soupape 23 qui comprend notamment une électrovanne.

La cuve de chauffe 21 peut accueillir une enceinte de cuisson 10, qui comprend un couvercle de pot 12, et un pot 11 qui contient les aliments 50 à confire au sucre (des racines de gingembre par exemple) qui baignent dans un sirop au sucre 51 ou dans du miel.

De l'eau 30 est disposée dans le fond de la cuve de chauffe 21 et baigne la partie inférieure du pot 11. La cuve de chauffe 21 comprend des moyens de chauffage, ici une résistance électrique 24 qui a pour effet de chauffer le pot 11 et l'eau 30. De l'eau 30 peut bien sûr être présente entre la paroi inférieure du pot 11 et le fond de la cuve de chauffe 21, en raison de pieds qui sont présents sur la face inférieure du pot 11.

La figure 2 représente l'appareil de cuisson agencé pour mettre en oeuvre le procédé selon la présente invention pendant une phase de cuisson primaire, et plus précisément, lors d'une phase de montée en température après chargement et mise sous tension de l'appareil par l'utilisateur. Au début de cette cuisson primaire, la résistance électrique 24 fournit de la chaleur à l'appareil dont les composants internes commencent à chauffer. En particulier, l'eau 30 entre la cuve de chauffe 21 et le pot 11 monte en température, commence à bouillir et produit un peu de vapeur d'eau 32. La consigne de température à atteindre dans la cuve de chauffe 21 est comprise entre 105°C et 120°C, et plus particulièrement entre 105°C et 110°C, bornes incluses.

La pression commence à augmenter dans tout l'espace interne de l'appareil, c'est-à-dire l'espace de la cuve de chauffe 21 fermé par le couvercle principal 22, et le pot 11 fermé par le couvercle de pot 12. La soupape 23 du couvercle principal 22 est réglée ou tarée pour ne s'ouvrir qu'au delà d'une certaine pression, par exemple comprise entre 1400mbar et 1800mbar, bornes incluses.

En raison de la température du couvercle de pot 12 qui est à ce moment encore faible, des gouttes de condensation 31 se forment sur le couvercle de pot 12, comme représenté (de la condensation peut également se former à d'autres endroits, mais elle n'est pas représentée). Pour permettre un équilibrage des pressions entre la cuve de chauffe 21 et le pot 11, le couvercle de pot 12 comprend des évents 13, mais ceux-ci sont en protubérance par rapport à la surface supérieure du couvercle de pot 12. Ainsi, les gouttes de condensation 31 qui sont sur la surface supérieure du couvercle de pot 12 ne peuvent pas tomber dans le pot 11, ce qui évite de diluer le sirop au sucre ou le miel déposés avec les aliments à confire au sucre.

La figure 3 représente l'appareil de la figure 2 toujours pendant la phase de cuisson primaire. Selon un aspect de l'invention, une fois que la cuve de chauffe 21 est montée suffisamment en température et en pression, et que de la vapeur d'eau 32 baigne l'ensemble de la cuve de chauffe 21 et du pot 11, il est avantageux d'opérer une décompression primaire, en ouvrant la soupape 23. Cette dernière peut comprendre une électrovanne par exemple, l'appareil comprend également un minuteur relié à une centrale de commande qui donne un signal de commande d'ouverture à l'électrovanne, une fois un premier temps de préparation écoulé entre 7 et 15 minutes par exemple), pendant un deuxième temps de préparation (moins de deux minutes par exemple).

Pendant ce deuxième temps de préparation, les gaz contenus dans l'espace interne de la cuve de chauffe 21 vont s'échapper, comme le montrent les flèches au niveau de la soupape 23. Ces gaz sont essentiellement de l'air et de la vapeur d'eau. Au cours de la décompression, la vapeur d'eau qui se créée avec l'eau 30 en ébullition va même chasser l'air contenu dans le pot 11 et la cuve de chauffe 21.

Cette décompression va donc permettre de remplacer l'air initialement contenu dans l'espace interne de la cuve de chauffe 21 par de la vapeur d'eau. A la fin du deuxième temps de préparation, la soupape 23 est refermée et l'étape de cuisson primaire continue, au cours de laquelle les échanges thermiques sont grandement améliorés, car il n'y a quasiment plus d'air, mais de la vapeur d'eau dans l'espace interne de la cuve de chauffe 21 et du pot 11. En d'autres termes, le chauffage du pot 11 est plus efficace et cela permet de réduire le temps total de fonctionnement de l'appareil.

Un deuxième avantage de chasser l'air est de chasser l'oxygène qu'il contient, et on obtient une atmosphère appauvrie en oxygène, ce qui limite les oxydations des aliments 50.

Le procédé selon l'invention peut continuer avec la phase de décompression et de macération, suivie de l'étape de cuisson secondaire, qui peut comprendre une étape de décompression secondaire.

En particulier, il est possible de continuer à chauffer les aliments à confire pendant le deuxième temps de préparation, ou non. De plus, le chauffage n'est pas forcément continuel et constant pendant la cuisson primaire et/ou la cuisson secondaire.

Pour des aliments de taille importante ou ayant un réseau cellulaire difficile à « purger de son eau » plusieurs cycles de cuisson primaire suivis d'une macération peuvent être réalisés avant de faire la cuisson secondaire.

## Revendications

1. Procédé de préparation d'aliments (50) à confire au sucre, comprenant les étapes consistant à :
- placer les aliments (50) à confire dans une enceinte de cuisson (10) avec une quantité prédéterminée de sirop au sucre (51) ou au miel,
- opérer une cuisson primaire par chauffage et exposition des aliments (50) à confire à une ambiance de vapeur sous pression pendant un temps de cuisson primaire,
- opérer une décompression de l'enceinte de cuisson (10) et laisser les aliments (50) à confire macérer dans le sirop pendant un temps de macération,
- opérer une cuisson secondaire par chauffage et exposition des aliments (50) à confire à une ambiance de vapeur sous pression pendant un temps de cuisson secondaire,
- les aliments (50) à confire sont chauffés à une température comprise entre 105°C et 120°C bornes incluses pendant l'étape de cuisson primaire et/ou l'étape de cuisson secondaire
- les aliments (50) à confire sont soumis à une pression comprise entre 1200mbar et 2000mbar bornes incluses pendant l'étape de cuisson primaire et/ou l'étape de cuisson secondaire.

2. Procédé selon la revendication précédente, **caractérisé en ce que** l'étape de cuisson primaire comprend une étape de décompression primaire de l'enceinte de cuisson (10).

3. Procédé selon la revendication précédente, **caractérisé en ce que** l'étape de décompression primaire est effectuée entre 7 et 15 minutes après le début de la cuisson primaire et dure moins de deux minutes.

4. Procédé selon l'une des revendications 1 à 3, **caractérisé en ce que** l'étape de cuisson secondaire comprend une étape de décompression secondaire de l'enceinte de cuisson (10).

5. Procédé selon la revendication précédente, **caractérisé en ce que** l'étape de décompression secondaire est effectuée entre 7 et 15 minutes après le début de la cuisson secondaire et dure moins de deux minutes.

6. Procédé selon l'une des revendications 1 à 5, **caractérisé en ce que** l'étape de cuisson secondaire est suivie d'une étape de décompression finale.

7. Procédé selon la revendication précédente, **caractérisé en ce que** l'étape de décompression primaire et/ou l'étape de décompression secondaire et/ou l'étape de décompression finale sont réalisées à une vitesse de décompression inférieure ou égale à 50mbar par minute.

8. Procédé selon l'une des revendications précédentes, **caractérisé en ce que** la température pendant l'étape de cuisson primaire est comprise entre 105°C et 110°C, bornes incluses.

9. Procédé selon l'une des revendications précédentes, **caractérisé en ce que** l'étape de macération dure entre 15 et 60 minutes, bornes incluses.

10. Procédé selon l'une des revendications précédentes, **caractérisé en ce que** les aliments (50) à confire sont placés dans un récipient et cuits au bain marie pendant l'étape de cuisson primaire et l'étape de cuisson secondaire.

11. Procédé selon l'une des revendications précédentes, **caractérisé en ce que** il est procédé à un ajout de sucre ou de miel lors de l'étape de macération.

12. Procédé selon l'une des revendications précédentes, **caractérisé en ce que** l'étape de cuisson primaire et l'étape de macération sont répétées au moins deux fois avant l'étape de cuisson secondaire.

## Patentansprüche

1. Verfahren zum Zubereiten von mit Zucker einzukochenden Lebensmitteln (50), umfassend die Schritte, die bestehen in:
- Platzieren der einzukochenden Lebensmittel (50) in einen Kochraum (10) mit einer vorbestimmten Menge Zucker- (51) oder Honigsirup,
- Vornehmen eines primären Kochens durch Erhitzen und Aussetzen von einzukochenden Lebensmitteln (50) einer Atmosphäre von Dampf unter Druck während einer primären Kochzeit,
- Vornehmen einer Dekompression des Kochraums (10) und Mazerieren lassen der einzukochenden Lebensmittel (50) in dem Sirup während einer Mazerationszeit,
- Vornehmen eines sekundären Kochens durch Erhitzen und Aussetzen von einzukochenden Lebensmitteln (50) einer Atmosphäre von Dampf unter Druck während einer sekundären Kochzeit,
- die einzukochenden Lebensmittel (50) werden während des Schritts des primären Kochens und / oder des Schritts des sekundären Kochens auf eine Temperatur zwischen 105 °C und 120 °C einschließlich der Grenzen erhitzt,
- die einzukochenden Lebensmittel (50) werden während des Schritt des primären Kochens und/oder des sekundären Kochens einem Druck zwischen 1200 mbar und 2000 mbar einschließlich der Grenzen ausgesetzt.

2. Verfahren nach dem vorstehenden Anspruch, **dadurch gekennzeichnet, dass** der primäre Schritt des Kochens einen Schritt der primären Dekompression des Kochraums (10) umfasst.

3. Verfahren nach dem vorstehenden Anspruch, **dadurch gekennzeichnet, dass** der Schritt der primären Dekompression zwischen 7 und 15 Minuten nach dem Beginn des primären Kochens durchgeführt wird und weniger als zwei Minuten dauert.

4. Verfahren nach einem der Ansprüche 1 bis 3, **dadurch gekennzeichnet, dass** der Schritt des sekundären Kochens einen Schritt der sekundären Dekompression des Kochraums (10) umfasst.

5. Verfahren nach dem vorstehenden Anspruch, **dadurch gekennzeichnet, dass** der Schritt der sekundären Dekompression zwischen 7 und 15 Minuten nach dem Beginn des sekundären Kochens durchgeführt wird und weniger als zwei Minuten dauert.

6. Verfahren nach einem der Ansprüche 1 bis 5, **dadurch gekennzeichnet, dass** auf den Schritt des sekundären Kochens ein abschließender Schritt der Dekompression folgt.

7. Verfahren nach dem vorstehenden Anspruch, **dadurch gekennzeichnet, dass** der Schritt der primären Dekompression und/oder der Schritt der sekundären Dekompression und/oder der abschließende Schritt der Dekompression mit einer Dekompressionsrate von weniger als oder gleich 50 mbar pro Minute durchgeführt werden.

8. Verfahren nach einem der vorstehenden Anspruch, **dadurch gekennzeichnet, dass** die Temperatur während des Schritt des primären Kochens zwischen 105 °C und 110 °C einschließlich der Grenzen liegt.

9. Verfahren nach einem der vorstehenden Ansprüche, **dadurch gekennzeichnet, dass** der Schritt der Mazeration zwischen 15 und 60 Minuten einschließlich der Grenzen dauert.

10. Verfahren nach einem der vorstehenden Ansprüche, **dadurch gekennzeichnet, dass** die einzukochenden Lebensmittel (50) während des Schritt des primären Kochens und des Schritt des sekundären Kochens in einem Behälter platziert werden und in dem Wasserbad gekocht werden.

11. Verfahren nach einem der vorstehenden Ansprüche, **dadurch gekennzeichnet, dass** während des Schritts der Mazeration eine Zugabe von Zucker oder Honig erfolgt.

12. Verfahren nach einem der vorstehenden Ansprüche, **dadurch gekennzeichnet, dass** der Schritt des primären Kochens und der Schritt der Mazeration mindestens zweimal vor dem Schritt des sekundären Kochens wiederholt werden.

## Claims

1. Method for preparing food (50) to be preserved with sugar, comprising steps consisting in:
- placing the food (50) to be preserved in a cooking vessel (10) with a predetermined quantity of sugar syrup (51) or honey syrup,
- carrying out a primary cooking process by heating and exposing the food (50) to be preserved to a pressurised steam atmosphere for a primary cooking time,
- decompressing the cooking vessel (10) and leaving the food (50) to be preserved to macerate in the syrup for a maceration time,
- carrying out a secondary cooking process by heating and exposing the food (50) to be preserved to a pressurised steam atmosphere for a secondary cooking time,
- the food (50) to be preserved is heated to a temperature between 105°C and 120°C limits included during the step of primary cooking and/or the step of secondary cooking
- the food (50) to be preserved is subjected to a pressure between 1200 mbar and 2000 mbar limits included during the step of primary cooking and/or the step of secondary cooking.

2. Method according to the preceding claim, **characterised in that** the step of primary cooking comprises a step of primary decompression of the cooking vessel (10).

3. Method according to the preceding claim, **characterised in that** the step of primary decompression is carried out between 7 and 15 minutes after the beginning of the primary cooking and lasts less than two minutes.

4. Method according to one of claims 1 to 3, **characterised in that** the step of secondary cooking comprises a step of secondary decompression of the cooking vessel (10).

5. Method according to the preceding claim, **characterised in that** the step of secondary decompression is carried out between 7 and 15 minutes after the beginning of the secondary cooking and lasts less than two minutes.

6. Method according to one of claims 1 to 5, **characterised in that** the step of secondary cooking is followed by a step of final decompression.

7. Method according to the preceding claim, **characterised in that** the step of primary decompression and/or the step of secondary decompression and/or the step of final decompression are carried out at a decompression speed less than or equal to 50 mbar per minute.

8. Method according to one of the preceding claims, **characterised in that** the temperature during the step of primary cooking is between 105°C and 110°C, limits included.

9. Method according to one of the preceding claims, **characterised in that** the step of maceration lasts between 15 and 60 minutes, limits included.

10. Method according to one of the preceding claims, **characterised in that** the food (50) to be preserved is placed in a recipient and cooked in a bain-marie during the step of primary cooking and the step of secondary cooking.

11. Method according to one of the preceding claims, **characterised in that** an adding of sugar or of honey is carried out during the step of maceration.

12. Method according to one of the preceding claims, **characterised in that** the step of primary cooking and the step of maceration are repeated at least twice before the step of secondary cooking.
